(19) Europäisches Patentamt
European Patent Office
Office européen des brevets

(11) Veröffentlichungsnummer: **0 095 199**
**B1**

# (12) EUROPÄISCHE PATENTSCHRIFT

(45) Veröffentlichungstag der Patentschrift: **12.06.85**

(51) Int. Cl.⁴: **C 01 B 11/02**, B 01 J 14/00, B 01 D 3/20, B 01 D 3/24

(21) Anmeldenummer: **83200595.3**

(22) Anmeldetag: **26.04.83**

## (54) Reaktor für die Herstellung von Chlordioxid.

(30) Priorität: **18.05.82 DE 3218649**

(43) Veröffentlichungstag der Anmeldung: **30.11.83 Patentblatt 83/48**

(45) Bekanntmachung des Hinweises auf die Patenterteilung: **12.06.85 Patentblatt 85/24**

(84) Benannte Vertragsstaaten: **AT BE CH DE FR GB IT LI SE**

(56) Entgegenhaltungen:
**CH - A - 366 519**
**DE - A - 3 118 795**
**NL - A - 6 906 359**

(73) Patentinhaber: **METALLGESELLSCHAFT AG, Reuterweg 14 Postfach 3724, D-6000 Frankfurt/M.1 (DE)**

(72) Erfinder: **Lohrberg, Karl, Dipl.-Ing., Breslauer Strasse 1, D-6056 Heusenstamm (DE)**
Erfinder: **Haas, Günther, Mauerweg 6, D-6370 Oberursel 5 (DE)**
Erfinder: **Reinhardt, Hans, Gravenbruchweg 68, D-6050 Offenbach am Main (DE)**

(74) Vertreter: **Fischer, Ernst, Dr., Reuterweg 14, D-6000 Frankfurt am Main 1 (DE)**

**EP 0 095 199 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreiung**

Die Erfindung betrifft einen Reaktor für die Herstellung von Chlordioxid.

Chlordioxid wird in zunehmendem Masse durch Einwirkung von Chlorwasserstoffsäure auf Natriumchlorat gewonnen. Da Chlordioxid bei höheren Temperaturen ausserordentlich explosiv ist, arbeitet man bei verhältnismässig niedriger Temperatur und mit hintereinanderliegenden Überlaufgefässen oder in einer Reaktionskolonne. Hierbei lässt man durch eine Reihe von hintereinandergeschalteten und in der Höhe gestaffelten Reaktionsgefässen, die z. B. als Kolonne angeordnet sind, Chlorat- und Salzsäurelösungen hindurchfliessen. In entgegengesetzter Richtung drückt oder saugt man einen Strom von inertem Gas hindurch, z. B. Luft oder Stickstoff, um das in den einzelnen Reaktionsräumen entstehende Chlordioxid auszuspülen und dabei auf ungefährliche Konzentrationen zu verdünnen. Das Gas durchströmt die Flüssigkeit mittels bis auf den Boden der Reaktionsräume reichender Gasleitungsrohre bzw. Gastauchungen.

Bei der genannten Erzeugung von Chlordioxid aus Natriumchlorat und Chlorwasserstoffsäure laufen im wesentlichen zwei Reaktionen gemäss folgenden Reaktionsgleichungen ab:

1. $NaClO_3 + 2\,HCL \rightarrow ClO_2 + ½\,Cl_2 + NaCl + H_2O$

2. $NaClO_3 + 6\,HCl \rightarrow 3\,Cl_2 + NaCl + 3\,H_2O$

Die zweite Reaktion ergibt kein Chlordioxid. Diese Reaktion muss daher soweit wie möglich unterdrückt werden. Eine Voraussetzung dafür ist ein möglichst geringer HCl-Überschuss in der Reaktionsflüssigkeit. Dies wiederum bedingt lange Verweilzeiten, insbesondere dann, wenn die teilweise verbrauchte Elektrolytlösung in eine Chloratelektrolyse rezirkuliert wird, wie im sogenannten Kesting- oder im München-Verfahren. In diesem Falle würde restliche Chlorwasserstoffsäure in der Elektrolyse zu Wasserstoff und Chlor zersetzt werden. Beides sind jedoch unerwünschte Produkte in der Chloratelektrolyse. Um diese unerwünschten Produkte zu vermeiden, muss ein $ClO_2$-Reaktor in mehrere Stufen bzw. Reaktionsräume unterteilt sein, z. B. in sechs, wie aus dem Kesting-Verfahren bekannt. In den obersten 4 Reaktionskammern wird bei von oben nach unten steigenden Temperaturen $ClO_2$ erzeugt. In den untersten beiden Kammern wird durch Temperatursteigerung bis zum Siedepunkt die restliche Chlorwasserstoffsäure mit dem noch vorhandenen $NaClO_3$ unter Erzeugung von NaCl, $Cl_2$ und $H_2O$ umgesetzt. Wegen der hohen Temperaturen und der korrosiven Medien werden die $ClO_2$-Reaktoren oft aus Titan gefertigt. Die oberen Stufen eines Reaktors laufen bei niedrigen Temperaturen, könnten daher auch aus anderen Materialien als Titan, z. B. aus Werkstoffen auf Basis von keramischem oder Kunststoff-Material, hergestellt werden. Da man aber mit der Möglichkeit einer $ClO_2$-Zersetzung mit entsprechenden Temperatur- und Drucksteigerungen rechnen muss, ist es zweckmässig, auch für die bei niedrigeren Temperaturen betriebenen oberen Reaktionsstufen Titan als Konstruktionswerkstoff zu verwenden.

Um ein Zersetzen des Chlordioxids zu vermeiden, muss man das $ClO_2$ auf einen Partialdruck von ca. 0,1 at reduzieren. Dies erfolgt durch Anwendung von vermindertem Druck oder durch Verdünnen mit Luft oder einer Kombination aus beiden. Die Konstruktion des Reaktors muss demzufolge für Vakuum und Druck ausgelegt werden, wobei der Unterdruck bei Luftverdünnung kleiner ist als bei der Anwendung von nur vermindertem Druck. Um nun das $ClO_2$ aus der Lösung zu strippen und um die Bildungsreaktion des Chlordioxids (Gleichung 1) nicht zu stoppen, muss man die Luft durch die Reaktionslösung perlen lassen oder sie hindurchsaugen. Den Widerstand der Reaktionsflüssigkeit kann man nun zum Aufbau eines Unterdrucks benutzen, wobei sich vorteilhafterweise das Vakuum mit steigender $ClO_2$-Konzentration erhöht.

Demgegenüber muss bei Arbeitsweisen mit stark verminderten Drücken dieser Tatsache durch eine entsprechend ausgelegte Konstruktion der Reaktionskammern Rechnung getragen werden. Ersichtlich wird hierdurch der konstruktive und materielle Aufwand erhöht.

Der Erfindung liegt die Aufgabe zugrunde, diese Nachteile zu beseitigen. Zur Lösung dieser Aufgabe geht die Erfindung aus von einem Reaktor für die Herstellung von Chlordioxid aus Natriumchlorat und Chlorwasserstoffsäure unter Einleitung eines Trägergas-Gegenstromes, wobei der Reaktor mehrere senkrecht übereinander angeordnete, durch Gastauchungen bzw. Gaseinleitungen und durch abgetauchte Flüssigkeitsüberläufe miteinander verbundene Reaktionsräume aufweist.

Bei einem Reaktor der genannten Art ist die Erfindung gekennzeichnet durch

a) zur Reaktormitte hin kegelmantelförmig ansteigenden Boden des jeweiligen Reaktionsraumes mit

b) über der Kegelmantelfläche angeordneter, kegelförmiger Gastauchung, wobei

c) die Austrittsstelle der Gastauchung auf der Kegelmantelfläche mit der Massgabe angeordnet ist, dass die Reaktionsflüssigkeit innerhalb (V 1) und ausserhalb (V 2) des Gastauchungsringes praktisch das gleiche Volumen aufweist.

Die Figur der Zeichnung zeigt in schematischer Darstellung einen Längsschnitt durch einen Reaktor gemäss der Erfindung. Am Kopf der Kolonne wird über Leitung 1 eine wässerige Lösung von Natriumchlorat und Chlorwasserstoff in den Reaktor 8 eingeführt und über Leitung 6 wird die verbrauchte Reaktionslösung ausgeschleust. Ein Trägergasstrom aus inertem Gas wird über Leitung 2 im Gegenstrom eingeführt. Mit 3 ist der kegelmantelförmig ansteigende Boden der Reaktionskammer bezeichnet und mit 4 die über dem Boden 3 angeordnete kegelmantelförmig bzw. trichterförmig ausgebildete Gastauchung 4. Durch die Rohre 5 erfolgt der Überlauf der Reaktionsflüssigkeit aus der jeweils darüberliegenden Reaktionskammer. V 1 und V 2 sind die praktisch gleichen Flüssigkeitsvolumina der einzelnen Reaktionskammern mit den jeweiligen Berührungspunkten oder Linien S. Die über der Gasaustrittsstelle der Tauchung 4 liegende Flüssigkeitssäule ist mit Fl bezeichnet.

Mit der besonderen Ausgestaltung der Reaktionskammern gemäss der Erfindung wird erreicht, dass das Volumen der Reaktionsflüssigkeit innerhalb des Einleitungsringes (V 1) und ausserhalb des Einleitungsringes (V 2) praktisch gleich ist und mithin die Volumina auch praktisch gleiches Gewicht aufweisen. Infolge dieser Aufteilung in praktisch gleiche Volumina (V 1 und V 2) liegt die Austrittsstelle des Gasstromes aus Trägergas wie Luft und Reaktionsgas, wie Chlordioxid und Chlor, in den einzelnen Reaktionskammern jeweils sozusagen am Schnittpunkt S der beiden Volumina (s. Figur) und damit genau unterhalb der jeweiligen Flüssigkeitssäule (Fl). Da somit der Druck des Gases genau dem Gewicht der darüberliegenden Flüssigkeitssäule entspricht und das Gas ferner hindurchgesaugt wird, so ist der Reaktor während des Betriebes entlastet. Das heisst, nur im Stillstand sind die jeweiligen Reaktionsböden mit dem Gewicht der Reaktionsflüssigkeit belastet, hingegen im Betriebszustand voll entlastet, da der Flüssigkeitsdruck genau dem angelegten Unterdruck entspricht. Die kegelmantelförmige Gastauchung besitzt keinerlei Öffnungen im Kegelmantel, durch die Reaktionsgase einseitig entweichen könnten. Somit wird ein Ringspalt, der durch senkrecht stehende Stege unterbrochen sein kann, als gleichmässige Gasaustrittsstelle geschaffen, der für die sichere und vorteilhafte Wirkungsweise des erfindungsgemässen Reaktors entscheidende Bedeutung besitzt.

Der Vorteil des erfindungsgemässen Reaktors liegt in der besonders günstigen kompakten Bauform mit ökonomisch günstigen, geringen Blechstärken der Reaktionsböden aus hochwertigem Werkstoff, wie Titan, sowie in kurzen Leitungen und geringem Raumbedarf.

## Patentanspruch

Reaktor für die Herstellung von Chlordioxid aus Natriumchlorat und Chlorwasserstoffsäure unter Einleitung eines Trägergas-Gegenstromes, mit mehreren senkrecht übereinander angeordneten, durch Gastauchungen und durch abgetauchte Flüssigkeitsüberläufe miteinander verbundenen Reaktionsräumen, gekennzeichnet durch

a) zur Reaktormitte hin kegelmantelförmig ansteigenden Boden des jeweiligen Reaktionsraumes mit

b) über der Kegelmantelfläche angeordneter, kegelförmiger Gastauchung, wobei

c) die Austrittsstelle der Gastauchung auf der Kegelmantelfläche mit der Massgabe angeordnet ist, dass die Reaktionsflüssigkeit innerhalb (V 1) und ausserhalb (V 2) des Gastauchungsringes praktisch das gleiche Volumen aufweist.

## Claim

A reactor for producing chlorine dioxide from sodium chlorate and hydrochloric acid, wherein an opposing stream of an entraining gas is introduced and which comprises a plurality of vertically superimposed reaction chambers, which are interconnected by immersed gas-feeding caps or gas inlets and by immersed downcomers for the liquid, characterized in that

a) the bottom of each reaction chamber is conical and rises toward the center of the reactor,

b) an immersed conical gas-feeding cap is disposed over the conical bottom, and

c) the outlet of the immersed gas-feeding cap is disposed on the conical bottom in such a manner that the reaction liquid has virtually the same volume within (V 1) and outside (V 2) the annular rim of the immersed gas-feeding cap.

## Revendication

Réacteur pour la préparation de dioxyde de chlore à partir de chlorate de sodium et d'acide chlorhydrique, par introduction d'un contre-courant de gaz porteur, le réacteur comportant plusieurs chambres de réaction disposées verticalement l'une au-dessus de l'autre, reliées l'une à l'autre par des tubes plongeurs ou des conduits d'injection de gaz et par des trop-pleins de liquide immergés, caractérisé par

a) un fond de chaque chambre de réaction correspondante qui monte vers le centre du réacteur, en forme de cône,

b) un tube plongeur en forme de cône disposé au-dessus de l'aire latérale du cône,

c) le point de sortie du tube plongeur sur l'aire latérale du cône qui est disposé de manière telle que le liquide de réaction à l'intérieur (V 1) et à l'extérieur (V 2) du tube plongeur annulaire présente pratiquement le même volume.

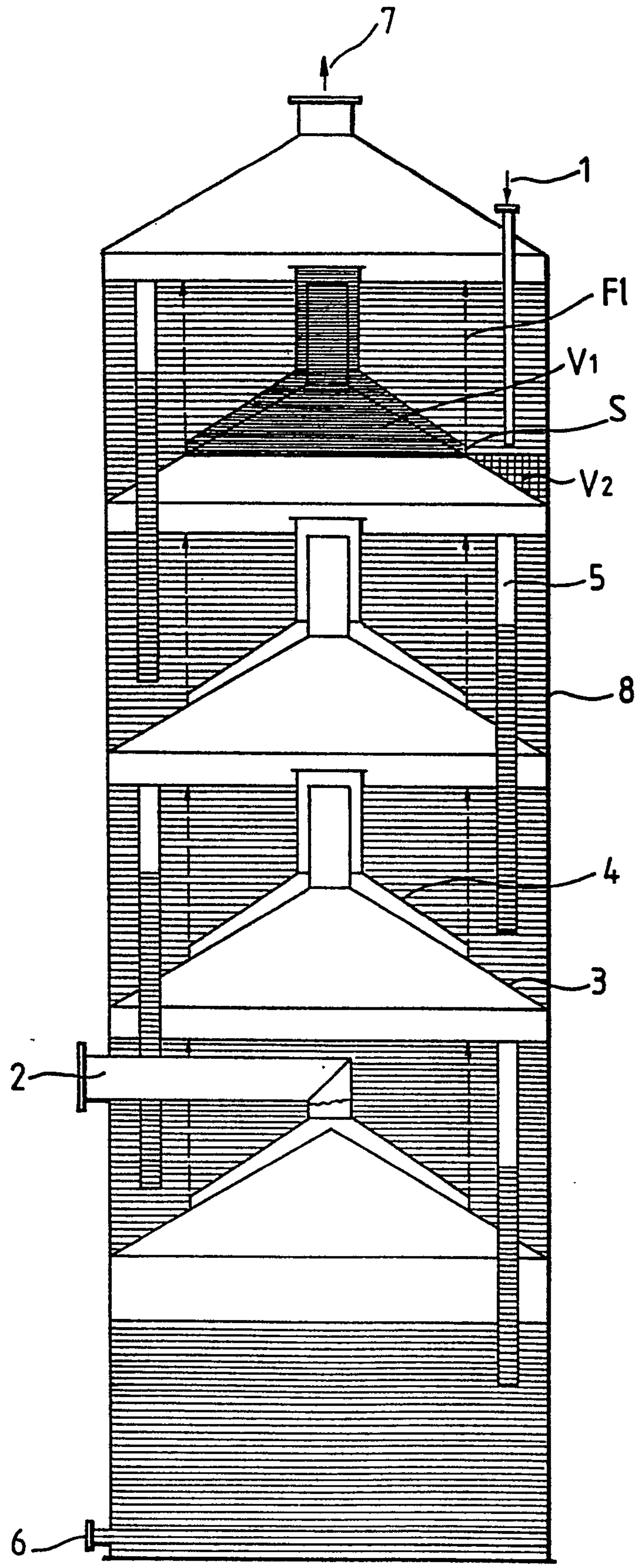
7
1
Fl
V1
S
V2
5
8
4
3
2
6